# EUROPEAN PATENT APPLICATION

(11) **EP 4 274 053 A1**
(43) Date of publication of application: **08.11.2023**
(21) Application number: 21915506.6
(22) Date of filing: 15.11.2021
(51) Int. Cl.: H02J 7/00, H01M 10/44, H02J 3/32

(54) **BATTERY AUTO-BALANCING DEVICE AND METHOD FOR ENERGY STORAGE SYSTEM**

(30) Priority: 31.12.2020 KR 20200188941
(71) Applicant: Hanwha Solutions Corporation, Jung-gu Seoul 04541 (KR)
(72) Inventor: HWANG, Ui Seon, Seoul 08702 (KR); MIN, Jun Hong, Seoul 08844 (KR)
(74) Representative: Mooser, Sebastian Thomas
(86) International application number: PCT/KR2021/016622
(87) International publication number: WO 2022/145708

(57) **Abstract**

The present invention relates to a battery auto-balancing device and method for an energy storage system, the device comprising: a plurality of battery units each having a battery, a relay for controlling the connection of the batteries to a power line and a battery manager for detecting and transmitting the state of the batteries; and a power converter for detecting the state of the batteries of each of the plurality of battery units, grouping the batteries into a charging group and a discharging group, and performing charging by using the batteries in the charging group or discharging by using the batteries in the discharging group according to a battery operation mode.

## Description

### [Technical Field]

The present invention relates to a battery auto-balancing device and method for an energy storage system, and more specifically to a system and method which are capable of performing auto-balancing regardless of the charging state of a battery.

### [Background Art]

An energy storage system (ESS) is applied to renewable energy generation where the amount of charge is not constant, and it stores the generated surplus power and plays a role of supplementing when the amount of power generation is insufficient compared to the amount of power in the load stage.

Recently, the number of cases of installing solar panels in an apartment or house and using an energy storage system to store and use the generated electric energy is increasing.

The ESS usually contains lithium-ion batteries and plays an important role in next-generation power systems.

However, recently, there have been several accidents in which the batteries of the ESS have exploded, and individuals who have heard the news of such accidents avoid installing the ESS because of the risk.

As one of the causes of battery explosion accidents, when batteries with large differences in the battery voltage and the state of charge (SOC) are installed in parallel, overcurrent occurs due to a potential difference between the batteries, and battery burnout or fire may occur due to the overcurrent.

In consideration of such problems, it is necessary for the installer to check the voltage and SOC of batteries and to adjust the voltages of each battery equally by charging or discharging in consideration of the respective states of the batteries.

In this process, if the voltages of the batteries do not match due to the installer's mistake, there is also a risk of overcurrent that may occur, and there has been a problem in that a lot of work time is required when there are large differences in voltages and SOC between batteries.

Korean Registered Patent No. 10-1563075 (APPARATUS AND METHOD FOR BALANCING OF BATTERY RACK IN ENERGY STORAGE SYSTEM, registered on October 19, 2015) describes an apparatus and method for balancing a battery rack.

More specifically, the above registered patent is a configuration in which after separating a specific battery rack with voltage imbalance from a high voltage warning and leaving in an independent battery state, the ESS master BMS connects the output of the specific battery rack to a first load bank to discharge.

That is, by separating and discharging a battery rack with the high voltage warning from the system, the battery rack with the high voltage warning is discharged, and the voltages of the other battery racks are lowered to the same level to solve the problems caused by a voltage difference between the battery racks.

However, the above registered patent is a configuration that does not consider the overall state of the battery racks, and separates and discharges a high voltage battery rack, and when the voltage difference with other battery racks is large, it takes a lot of time to discharge. In addition, a plurality of relays are used for the separation and individual discharge of battery racks, and there has been a problem in that the cost increases due to the complexity of the control program for controlling a plurality of relays.

In the case of industrial use, the cost can be tolerated, but in the case of home use, there is a limitation in that it is difficult to apply in the actual market due to the complicated configuration and increase in cost.

### [Disclosure]

### [Technical Problem]

The problem to be solved by the present invention in view of the above-described problems is directed to providing a battery auto-balancing device and method for an energy storage system that are suitable for ESS.

### [Technical Solution]

The battery auto-balancing device for an energy storage system according to an aspect of the present invention for solving the above-described technical problems includes a plurality of battery units each having a battery, a relay for controlling the connection of the battery to a power line and a battery manager for detecting and transmitting the state of the battery; and a power converter for detecting the state of the battery of each of the plurality of battery units, grouping batteries into a charging group and a discharging group, and performing charging by using the batteries in the charging group or discharging by using the batteries in the discharging group according to a battery operation mode.

In an exemplary embodiment of the present invention, the power converter may comprise a processor which communicate with the battery manager provided in each of the plurality of battery units, group the batteries into the charging group and the discharging group, and control the relay according to a mode

In an exemplary embodiment of the present invention, the processor may detect a maximum voltage battery having the highest voltage and a minimum voltage battery having the lowest voltage among the batteries, set a battery unit as the discharging group, which includes a battery having a voltage value within a safe voltage range based on the maximum voltage, and set a battery unit as the charging group, which includes a battery having a voltage value within a safe voltage range based on the minimum voltage.

In addition, the battery auto-balancing method for an energy storage system according to another aspect of the present invention may include the steps of a) detecting a battery having a maximum voltage and a battery having a minimum voltage by checking the battery voltage of each of battery units by a processor of a power converter; b) comparing the battery states of all battery units based on the batteries having the maximum voltage and the minimum voltage and grouping the same into a charging group and a discharging group; and c) checking a battery operation mode, performing balancing by charging the batteries belonging to the charging group in the charging mode and by discharging the batteries belonging to the discharging group in the discharging mode by the processor.

In an exemplary embodiment of the present invention, step a) may sequentially detect the voltages of all batteries and extract the maximum and minimum voltage values that can be renewed based on the voltages of all batteries.

In an exemplary embodiment of the present invention, step b) may compare the maximum voltage with the voltages of all the batteries, set a battery unit as the discharging group, which includes a battery having a voltage value within a safe voltage range based on the maximum voltage among the batteries, and set a battery unit as the charging group, which includes a battery having a voltage value within a safe voltage range based on the minimum voltage as a charging group.

### [Advantageous Effects]

The present invention divides batteries into a charging group and a discharging group according to the voltage of installed batteries, and by balancing the voltage of the batteries by charging the charging group or discharging the discharging group according to the operation mode, it simplifies the configuration of a system, and moreover, the present invention has the effects of shortening the time required for balancing and being suitable for ESS by reducing the cost.

More specifically, the present invention detects a battery with a maximum voltage and a battery with a minimum voltage among installed batteries, classifies batteries having similar voltages based on the maximum voltage and minimum voltage batteries and assigns the same into groups, and then sets a group including the maximum voltage battery as a discharging group and a group including the minimum voltage battery as a charging group, so as to perform balancing while performing charging or discharging according to the ESS operation.

### [Description of Drawings]

FIG. 1 is a block diagram of the auto-balancing device for a home energy storage system according to a preferred exemplary embodiment of the present invention.
FIG. 2 is a flowchart of the auto-balancing method of the present invention.
FIG. 3 is a detailed flowchart of step S10 in FIG. 2.
FIG. 4 is a detailed flowchart of step S20 in FIG. 2.

### - Explanation of Reference Numerals -

| | | | |
|---|---|---|---|
| 10: | Power converter | 20: | Battery unit |
| 30: | PV module | 40: | Load |
| 50: | Power grid | | |

### [Modes of the Invention]

In order to fully understand the configuration and effects of the present invention, preferred exemplary embodiments of the present invention will be described with reference to the accompanying drawings. However, the present invention is not limited to the exemplary embodiments disclosed below, and may be embodied in various forms, and various modifications may be made. However, the description of the present exemplary embodiments is provided so that the disclosure of the present invention is complete, and to fully inform the scope of the invention to those of ordinary skill in the art to which the present invention pertains. In the accompanying drawings, components are enlarged in size from reality for the convenience of description, and the ratios of each component may be exaggerated or reduced.

Terms such as "first," "second" and the like may be used to describe various components, but the components should not be limited by the above terms. The terms may be used only for the purpose of distinguishing one component from another component. For example, without departing from the scope of the present invention, a "first component" may be called a "second component," and similarly, a "second component" may also be called a "first component." In addition, a singular expression may include a plural expression, unless otherwise specified. The terms used in the exemplary embodiments of the present invention may be interpreted with the commonly known meaning to those of ordinary skill in the relevant technical field unless otherwise specified.

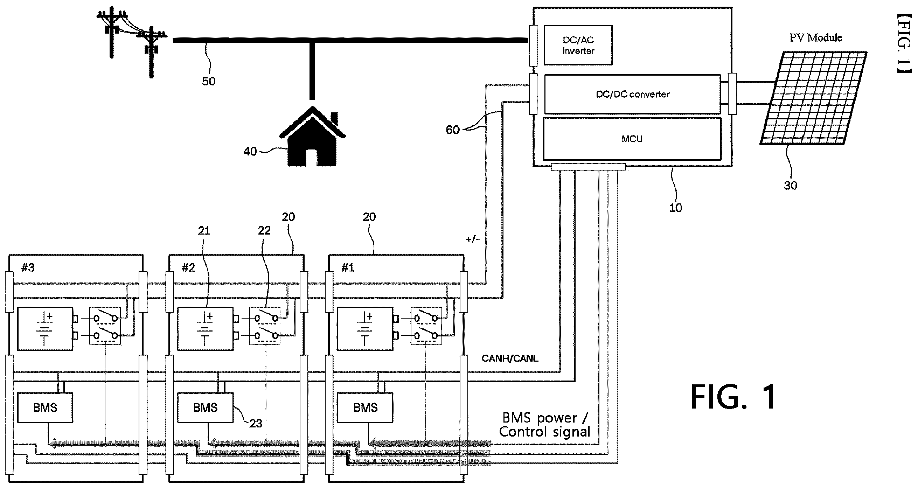

FIG. 1 is a block diagram of the auto-balancing device for a home energy storage system according to a preferred exemplary embodiment of the present invention.

Referring to FIG. 1, the present invention includes a plurality of battery units 20 that are respectively connected in parallel and classified into a charging group or a discharging group according to an initial voltage value in which the charging group performs charging in a charging mode and the discharging group discharges in a discharging mode, and a power converter 10 for converting the power between a power grid 50 to which a load 40 is connected, a PV module 30 and the battery units 20, and performing control by checking the voltage and SOC of each battery unit 20 while communicating with the battery units 20 and grouping the battery units 20 into the charging group and the discharging group in an initial installation state.

Hereinafter, the configuration and operation of the auto-balancing device of the energy storage system according to the present invention configured as described above will be described in more detail.

First of all, the power converter 10 converts the power (DC) which is produced by the PV module 30 into the charging voltage of the battery unit 20, or converts a DC voltage of the battery unit 20 into an AC voltage to supply to the load 40 or the power grid 50 to which the power plant is connected, or serves to convert an AC voltage of the power grid 50 into a charging voltage.

Although the PV module 30 is exemplified in the drawing, it may include all power generation devices to which the ESS system such as wind power generation and the like is applied.

The power converter 10 includes a DC/DC converter 12 and a DC/AC converter 13. It also includes a processor 11 for control.

Each of the battery units 20 may include a battery 21, a relay 22 for selectively connecting the battery 21 to the power converter 10, and a battery manager 23 for detecting and controlling the state of the battery 21.

The battery manager 23 communicates with a processor 11 of the power converter 10 such that the battery state of each battery unit 20 can be checked from the power converter 10.

The battery manager 23 may receive power from the power converter 10 to operate regardless of the state of their own batteries 21.

That is, the power converter 10 may perform a master role of battery management together.

Each battery 21 of the battery unit 20 is connected in parallel to a DC/DC converter 12 of the power converter 10 through a power line 60 which is separated from the power grid 50.

In this configuration, when the processor 11 is initially installed, balancing of the batteries 21 of each battery unit 20 is performed.

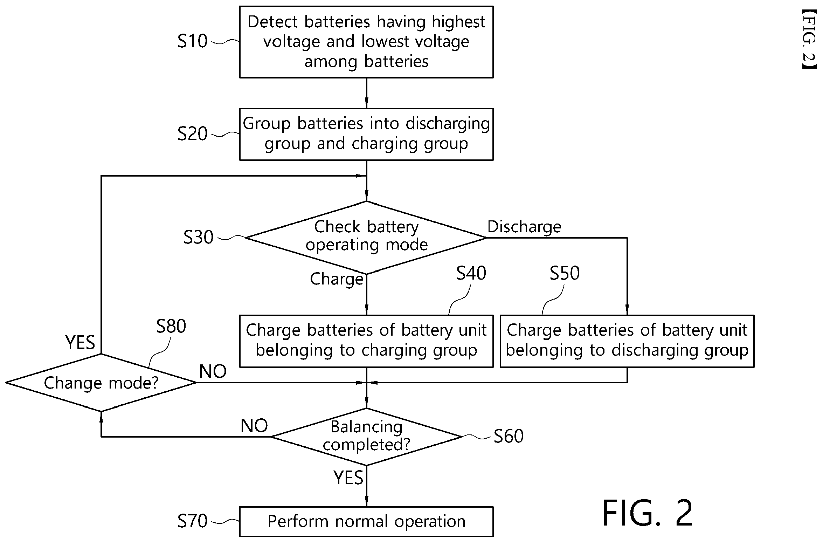

Specifically, as illustrated in the flowchart of FIG. 2, the processor 11 includes the steps of checking the state of all batteries 21 of each battery unit 20 (S10), grouping according to the state of the battery 21 (S20), checking the current battery operation mode (S30), charging the battery 21 of the battery unit 20 of the charging group among the grouped battery units 20 if the battery operation mode is a charging mode in step S30 (S40), discharging the battery 21 of the battery unit 20 of the discharging group among the grouped battery units 20 if the battery operation mode is a discharging mode in step S30 (S50), checking whether the voltage balancing of the batteries 21 of the battery units 20 is completed in the current operation mode (S60), and performing normal operation if the balancing is completed in step S60, and re-performing from step S10 if the balancing is not completed (S70).

Hereinafter, the balancing method of the present invention configured as described above will be described in more detail.

First of all, the processor 11 of the power converter 10 checks the state of the battery 21 of each battery unit 20 as in step S10.

Specifically, each battery unit 20 operates as a slave of the battery management system (BMS), and transmits the state of the battery 21 of each battery unit 20 through communication with the power converter 10.

The battery manager 23 of the battery unit 20 transmits the state of the battery 21 to the processor 11 of the power converter 10, respectively.

In this case, the processor 11 identifies a specific battery having the highest voltage and a specific battery having the lowest voltage among the batteries 21 of all battery units 20, and designates the same as the maximum voltage battery and the minimum voltage battery, respectively.

Next, all other batteries are checked, and batteries within the range of the voltage of the maximum voltage battery and a set voltage difference (hereinafter, referred to as Delta V) are grouped. The group at this time becomes a discharging group.

In addition, batteries having a value within the voltage of the minimum voltage battery and delta V and are found and grouped into a charging group.

The delta V becomes the maximum allowable voltage difference when connected in parallel.

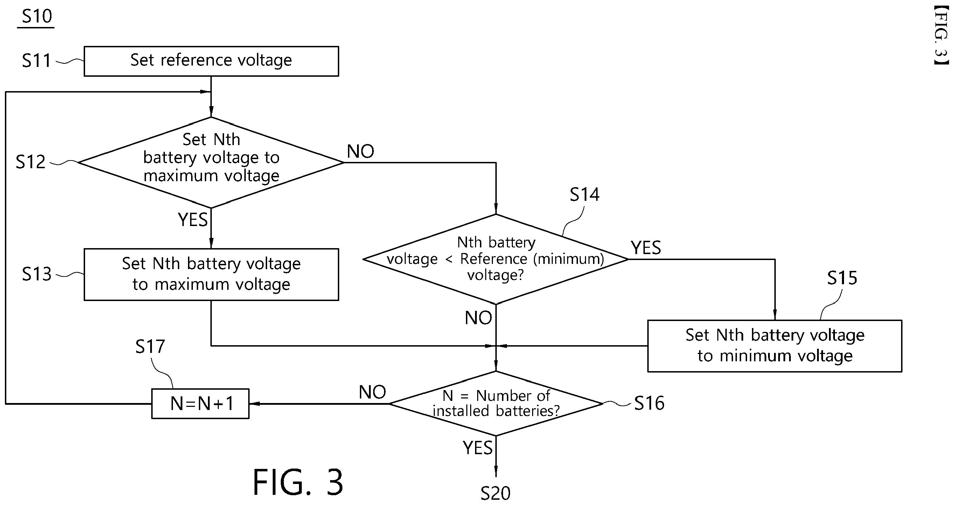

FIG. 3 is a detailed flowchart of step S10.

Step S10 is a process of finding a maximum voltage and a minimum voltage among voltages of several batteries.

Referring to FIG. 3, step S11 is an initialization step, which sets a set reference maximum voltage and reference minimum voltage.

Next, as in step S12, it is checked whether the voltage of the first battery unit 20 #1 is greater than the set reference maximum voltage.

If it is determined in step S12 that the voltage of the first battery unit 20 #1 is greater than the reference maximum voltage, the voltage of the battery 21 of the first battery unit 20 #1 is set as the maximum voltage as in step S13.

If it is determined in step S12 that the voltage of the first battery unit 20 #1 is not greater than the reference maximum voltage, it is checked whether the voltage of the first battery unit 20 #1 is less than the reference voltage as in step S14.

If it is determined in step S14 that the voltage of the first battery unit 20 #1 is less than the reference minimum voltage, the voltage of the first battery unit 20 #1 is set as the minimum voltage in step S15.

Through this process, at least the maximum voltage, the minimum voltage or the reference voltage is determined. The meaning of these voltages is explained more clearly in the following repeated process.

In the above example, N is the processing process of the first battery unit 20 #1, and after checking in step S16 whether N is the same as the number of installed batteries, if it is not the same, N is increased by 1 as in step S17, and step S12 is re-performed.

That is, the battery voltage of the second battery unit 20 #2 is detected and compared with the battery voltage of the first battery unit 20 #1.

If the battery voltage of the first battery unit 20 #1 is higher than the reference voltage, it is set to the maximum voltage, and if it is low, it is set to the minimum voltage, and the maximum voltage or the minimum voltage are compared with the voltage of the second battery unit 20 #2.

If it is determined in step S12 that the battery voltage of the second battery unit 20 #2 is higher than the battery voltage of the first battery unit 20 #1, the battery voltage of the second battery unit 20 #2 is set to the maximum voltage in step S13. In this case, the battery voltage of the first battery unit 20 #1 is set to the minimum voltage.

Conversely, if the battery voltage of the second battery unit 20 #2 is lower than the battery voltage of the first battery unit 20 #1, the battery voltage of the second battery unit 20 #2 is set to the minimum voltage in step S15. In this case, the battery voltage of the first battery unit 20 #1 is set to the maximum voltage.

Through the above process, at least the maximum and minimum voltage values may be obtained.

In this case, the maximum voltage and the minimum voltage may be changed while repeating the process of FIG. 3.

As a result, it is possible to identify a battery having a maximum voltage and a battery having a minimum voltage among the N batteries.

That is, in step S10, a battery having a maximum voltage and a battery having a minimum voltage may be detected among the N batteries 21 that are currently connected to the system.

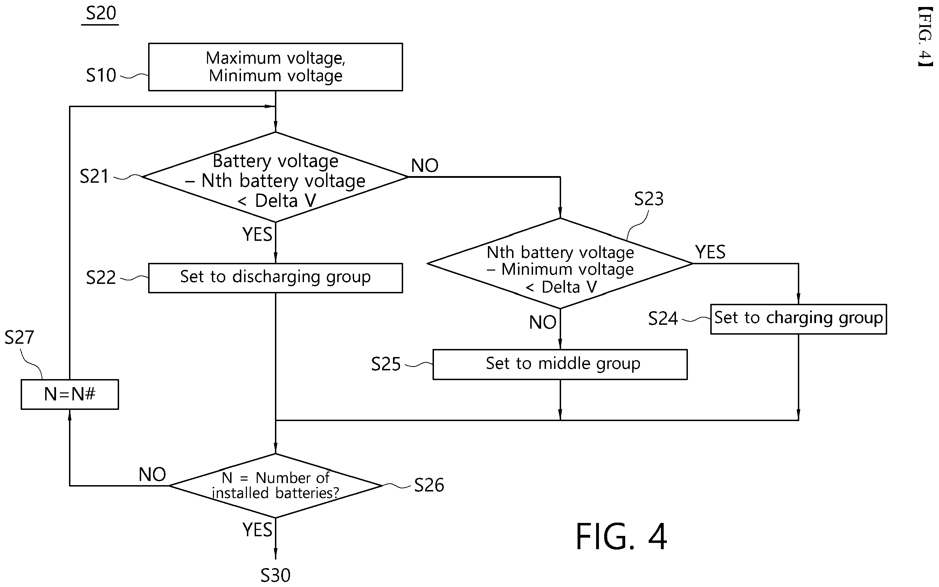

FIG. 4 is a detailed flowchart of step S20.

Step S20 is a step of grouping N batteries 21.

First of all, in step S21, it is checked whether the result of subtracting the voltage of the first battery unit 20 #1 from the maximum voltage detected in step S10 is less than delta V.

As described above, delta V is the maximum allowable voltage difference, and when batteries having a voltage difference greater than delta V are connected in parallel, overcurrent may occur.

In the present invention, delta V is used as a safe voltage difference range for safety.

If the determination of step S21 is satisfied, as in step S22, the first battery unit 20 #1 is set as a discharging group.

If the determination of step S21 is not satisfied, or after performing step S21, as in step S23, it is checked whether the result of subtracting the minimum voltage from the battery voltage of the first battery unit 20 #1 is less than the safe voltage difference range (delta V), and if the conditions are satisfied, it is set as a charging group as in step S24.

Even when the determination of step S21 and the determination of step S23 are not satisfied, steps S23 and S25 are performed, respectively. This is because one battery may belong to both of a discharging group and a charging group.

Thereafter, as in step S25, it is checked whether the grouping of all batteries is completed, and if it is not completed, step S21 is re-performed for the next battery by adding N in step S26.

The batteries 11 of all the battery units 20 installed through this process are grouped.

That is, the batteries within the safe voltage range from the maximum voltage become the discharging group, and the batteries within the safe voltage range from the minimum voltage become the charging group.

Next, as in step S30, the current battery operation mode is checked.

The operation mode of the battery is charging or discharging, charging is an operation of charging power of the PV module 30 or the power grid 50 to the battery, and discharging refers to a state in which the voltage of the battery is used by the load 40.

If the battery operation mode confirmed in step S30 is the charging mode, as in step S40, the power converter 10 controls the relay 22 so as to charge the batteries 21 of the battery unit 20 of the charging group among the grouped battery units 20.

That is, the relay 22 of the battery unit 20 belonging to the charging group is closed to allow charging, and the relay 22 of the battery units 20 belonging to the discharging group, not the charging group, is opened so as not to perform a charging operation.

If the battery operation mode confirmed in step S30 is a discharging mode, as in step S50, the power converter 10 closes the relay 22 of the battery unit 20 belonging to the discharging group among the grouped battery units 20, and opens the relay of the battery unit belonging to the charging group so as to discharge the batteries 21 of the battery unit 20 belonging to the discharging group.

Through this process, the voltage difference between the battery units belonging to the charging group and the battery units belonging to the discharging group is reduced, and thus, balancing is performed.

In this case, the voltage as a reference for balancing may obtain the similar result to that based on the voltage of the battery units belonging to a middle group.

Next, in step S60, it is checked whether the balancing of the voltages of the batteries 21 of the battery units 20 is completed in the current operation mode.

Balancing completion confirmation may be completed when the voltage of the entire battery is within the safe voltage range.

When the balancing is completed, the normal operation of step S70 of operating the entire battery unit 20 in a single operation mode is performed.

If the balancing is not completed, step S10 may be re-performed.

As such, the present invention can safely perform balancing when installing an ESS while using a simple configuration.

Although the exemplary embodiments according to the present invention have been described above, these are merely exemplary, and those of ordinary skill in the art will understand that various modifications and equivalent ranges of exemplary embodiments are possible therefrom. Accordingly, the true technical protection scope of the present invention should be defined by the following claims.

### [Industrial Applicability]

The present invention is directed to providing a battery balancing device and method that are suitable for home ESS by using the laws of nature, and thus has industrial applicability.

## Claims

1. A battery auto-balancing device for an energy storage system, comprising:
a plurality of battery units each having a battery, a relay for controlling the connection of the battery to a power line and a battery manager for detecting and transmitting the state of the battery; and
a power converter for detecting the state of the battery of each of the plurality of battery units, grouping batteries into a charging group and a discharging group, and performing charging by using the batteries in the charging group or discharging by using the batteries in the discharging group according to a battery operation mode.

2. The battery auto-balancing device of claim 1, wherein the power converter comprises a processor configured to communicate with the battery manager provided in each of the plurality of battery units, group the batteries into the charging group and the discharging group, and control the relay according to a mode.

3. The battery auto-balancing device of claim 2, wherein the processor is configured to detect a maximum voltage battery having the highest voltage and a minimum voltage battery having the lowest voltage among the batteries, set a battery unit as the discharging group, which includes a battery having a voltage value within a safe voltage range based on the maximum voltage, and set a battery unit as the charging group, which includes a battery having a voltage value within a safe voltage range based on the minimum voltage.

4. A battery auto-balancing method for an energy storage system, comprising the steps of:
a) detecting a battery having a maximum voltage and a battery having a minimum voltage by checking the battery voltage of each of battery units by a processor of a power converter;
b) comparing the battery states of all battery units based on the batteries having the maximum voltage and the minimum voltage and grouping the same into a charging group and a discharging group; and
c) checking a battery operation mode, performing balancing by charging the batteries belonging to the charging group in the charging mode and by discharging the batteries belonging to the discharging group in the discharging mode by the processor.

5. The method of claim 4, wherein step a) comprises sequentially detecting the voltages of all batteries and extracting the maximum and minimum voltage values that can be renewed based on the voltages of all batteries.

6. The method of claim 4, wherein step b) comprises comparing the maximum voltage with the voltages of all the batteries, setting a battery unit as the discharging group, which includes a battery having a voltage value within a safe voltage range based on the maximum voltage among the batteries, and setting a battery unit as the charging group, which includes a battery having a voltage value within a safe voltage range based on the minimum voltage.
